# EUROPEAN PATENT APPLICATION

(11) **EP 2 445 126 A1**
(43) Date of publication of application: **25.04.2012**
(21) Application number: 11185729.8
(22) Date of filing: 19.10.2011
(51) Int. Cl.: H04B 11/00

(54) **Communication method for portable terminal**

(30) Priority: 20.10.2010 KR 20100102490
(71) Applicant: Samsung Electronics Co., Ltd, Gyeonggi-do (KR)
(72) Inventor: Roh, Ho-Hyun, GYEONGGI-DO (KR)
(74) Representative: Clarkson, Paul Magnus

(57) **Abstract**

A communication method for a portable terminal preferably includes emitting, by a transmission portable terminal, at least one of light or sound and notifying a server of emission details, sensing, by a reception portable terminal, the emitted light or sound and notifying the server of sensing details. The transmission portable terminal transmits data to the server, and receives by each of one or more reception portable terminals which have sensed the light or sound, the data through the server.

## Description

### BACKGROUND OF THE INVENTION

### Field of the Invention

The present invention relates to a portable terminal, and more particularly to, a communication method for a portable terminal.

### Description of the Related Art

Generally, a portable terminal refers to an electronic apparatus which performs communication and exchanges data while the device is in motion. With the diversification and development of a mobile communication environment, the application range of a portable terminal limited, which was originally limited to voice communication, is now expanding to various fields, for example, using Audio On Demand (AOD) and Video On Demand (VOD) services, performing video communication in real time with a camera provided in the portable terminal, downloading and playing a game application, and viewing Digital Multimedia Broadcasting (DMB) with a DMB receiver.

Recent portable terminals now provide a number of quite useful functions that heretofore had been executable only in large-scale computers through an Operating System (OS) such as iOSⓇ of Apple, AndroidⓇ of Google, etc., and also provide useful functions specialized for portable devices that are specialized for the portable terminals.

Examples of the functions specialized for the portable devices may include exchanging data between two portable terminals through a particular action such as bringing the portable terminals into contact with each other or shaking the portable terminals in a certain manner.

However, data exchange is currently possible only in a one-to-one manner of correspondence of a conventional data exchange method. Therefore, a conventional data exchange method needs to be improved to allow several portable terminals to exchange data at the same time.

Accordingly, an exemplary aspect of the present invention is to allow several portable terminals to exchange data at the same time.

According to an exemplary aspect of the present invention, there is provided a communication method for a portable terminal. The communication method includes emitting, by a transmission portable terminal, at least one of a light or sound and notifying a server (or base station) of emission details, sensing, by a reception portable terminal, the emitted light or sound and notifying the server of sensing details, and transmitting, by the transmission portable terminal, data to the server, and receiving, by each of one or more reception portable terminals which have sensed the light or sound, the data through the server.

According to another exemplary aspect of the present invention system for portable terminal data exchange by at least three portable terminals comprises:
a transmission portable terminal;
a plurality of reception portable terminals;
a server in communication with said transmission portable terminal and the plurality of reception portable terminals;
the transmission portable terminal having a sharing mode in which a light emission or sound emission module for contacting the plurality of reception portable terminals;
the plurality of portable terminals also having sharing mode for that senses the light or sound emitted by the transmission portable terminal;
wherein the server receives notification from the reception mobile terminals when the reception mobile terminals sense a light or sound emitted from the transmission portable terminal, and the server provides the transmission portable terminal with a list of reception portable terminals; and
wherein the transmission portable terminals transmits sharing data to the server which retransmits the sharing data to the plurality of reception portable terminals.

The above and other exemplary features and advantages of an exemplary embodiment of the present invention will become more apparent from the following detailed description taken in conjunction with the accompanying drawings, in which:
FIG. 1 is a block diagram of a portable terminal according to an exemplary embodiment of the present invention;
FIG. 2 is a flowchart illustrating a process in which a plurality of portable terminals exchange data according to an exemplary embodiment of the present invention; and
FIG. 3 is an exemplary diagram illustrating a process in which a plurality of portable terminals exchange data according to an exemplary embodiment of the present invention.

### DETAILED DESCRIPTION

Hereinafter, exemplary embodiments of the present invention will be described in detail with reference to the accompanying drawings.

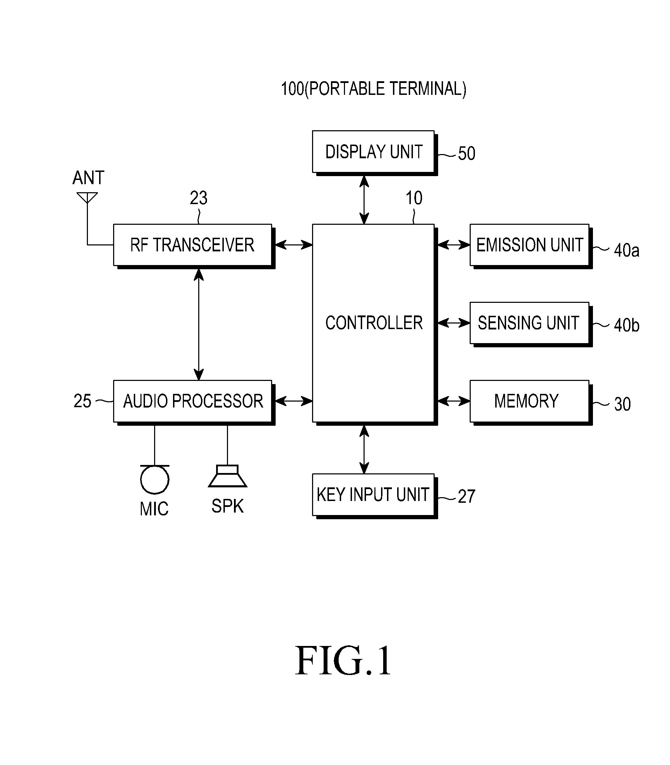

FIG. 1 is a block diagram of a portable terminal 100 according to an exemplary embodiment of the present invention. A number of device modules which can be included in the portable terminal 100, such as a Global Positioning System (GPS) module, a camera module, a Bluetooth module, a WiFi module, an acceleration sensor, a proximity sensor, a geo-magnetic sensor, a Digital Multimedia Broadcasting (DMB) receiver, etc. are not shown in FIG 1, those of ordinary skill in the art should appreciate that such device modules may also be included in the portable terminal 100 according to the present invention in order to provide corresponding functions.

The portable terminal 100 according to an exemplary embodiment of the present invention comprises an electronic apparatus which easily portable, and may be, for example, a general cellular phone (e.g., a pitcher phone), a smart phone, an International Mobile Telecommunication (IMT)-2000 terminal, a Wideband Code Division Multiple Access (WCDMA) terminal, a Universal Mobile Telecommunication Service (UMTS) terminal, a Personal Digital Assistant (PDA), a Portable Multimedia Player (PMP), a DMB device, a small-size desktop computer, a notebook, tablet, or the like.

A Radio Frequency (RF) transceiver 23 includes an RF unit and a modem. The RF unit includes an RF transmitter for up-converting a frequency of a transmission signal and amplifying the up-converted transmission signal and an RF receiver for low-noise-amplifying a received signal and down-converting a frequency of the low-noise-amplified signal. The modem preferably includes a transmitter for encoding and modulating the transmission signal and a receiver for demodulating and decoding the received signal.

An audio processor 25 may constitute a codec and could include a data codec and an audio codec. The data codec processes packet data and the audio codec processes audio signals like voice and a multimedia file. The audio processor 25 also converts a digital audio signal received from the modem into an analog audio signal through the audio codec and reproduces the analog audio signal, or converts an analog audio signal generated from a microphone (MIC) into a digital audio signal through the audio codec and transmits the digital audio signal to the modem. The codec may be separately provided or may be included in a controller 10.

A key input unit 27 may include keys for inputting numeric and character information and function keys for setting various functions. When a display unit 50 according to an exemplary embodiment of the present invention is implemented with a touch screen, the key input unit 27 according to an exemplary embodiment of the present invention may not be included in the portable terminal 100 or may include only preset minimum keys, such that the display unit 50 may replace a part or an entirety of the key input function of the key input unit 27.

A memory 30 may include program and data memories. The program memory stores programs for controlling a general operation of the portable terminal 100. The memory 30 according to an exemplary embodiment of the present invention may comprise a non-transitory machine readable medium, may include an external memory such as a Compact Flash (CF), a Secure Digital (SD), a Micro Secure Digital (Micro-SD), a Mini-SD, an Extreme Digital (xD), a memory stick, or the like, just to name some possible storage devices.

With continued reference to FIG 1, an emission unit 40a emits light or sound which can be projected over a predetermined distance. Thus, the emission unit 40a according to an exemplary embodiment of the present invention may be implemented with a flash device or a sound output device that can transmit light or sound waves at a time toward several devices positioned within a predetermined distance range.

The emission unit 40a according to an exemplary embodiment of the present invention is assumed to be a flash device, and this is because a recent portable terminal generally includes a camera module (not shown) including the flash device. The flash device may be separately provided in the portable terminal 100, or may be included in the camera module. Herein, the camera module converts a light signal (input or captured) through a lens into an electric image signal and outputs the electric image signal to allow a user to capture an image (a moving image or a still image). The camera module may preferably include a lens (not shown) for collecting light and delivering the light to a camera sensor (not shown), the camera sensor for converting the captured image signal into an electric image signal, a camera memory (not shown) for temporarily storing the captured image, a camera flash for providing a predetermined light intensity according to ambient conditions at the time of capturing, and a camera controller (not shown) for controlling the overall operation of the camera module and for converting the captured analog image signal into digital data through the camera sensor.

Meanwhile, the camera flash device, which can be provided as an exemplary embodiment of the emission unit 40a shown in FIG. 1, comprises a camera component that uses a photographing light source, discharge light instantly generated when high-voltage Direct Current (DC) flows through a xenon discharge tube. Such a flash device is commonly called a strobo which is a product name, and is referred to as an electronic flash or a speed flash. A layer-built dry cell is mainly used as a power source to boost a voltage up to a required high voltage. The type of the flash device may comprise a clip-on type having a guide number (GN) of 14 ― 30 or a clip-type having a GN of 14 - 30. An emission time is very short, as small as approximately 1/1,000 second, and the flash device, because of being a very bright like white light (natural light), serves as a main light source for artificial light of the device.

The sound output device can also be provided as another exemplary embodiment of the emission unit 40a is assumed to output sounds of high frequency or low frequency beyond a human audible frequency band. The reasons are because the sound of high frequency or low frequency is distinguishable from noises generated around a user (or the portable terminal 100) and thus is easy to sense by a sensing unit 40b, and is likely not to affect the hearing of the portable terminal user, as the volume is not excessive. However, according to a modification of an exemplary embodiment, sound output from the sound output device (the emission unit 40a) may be sound in a frequency band audible by the portable terminal user.

The sensing unit 40b senses light or sound emitted from the emission unit 40a. Thus, the sensing unit 40b according to an exemplary embodiment of the present invention may be implemented with a light receiving device capable of sensing light emitted from the emission unit 40a (e.g., a flash from the flash device) or with a sound sensing device (e.g., a microphone) capable of sensing sound emitted from the emission unit 40a. That is, the sensing unit 40b according to an exemplary embodiment of the present invention may be implemented with a device corresponding to the flash device of the emission unit 40a to sense light or sound being emitted from the emission unit 40a.

A display unit 50 may preferably include a Liquid Crystal Display (LCD), or a Passive Matrix Organic Light Emitting Diode (PMOLED) or Active Matrix OLED (AMOLED) as an OLED, and outputs display information generated in the portable terminal 100. The display unit 50 according to an exemplary embodiment of the present invention may include a touch screen to operate as an input unit for controlling the portable terminal 100, together with the key input unit 27.

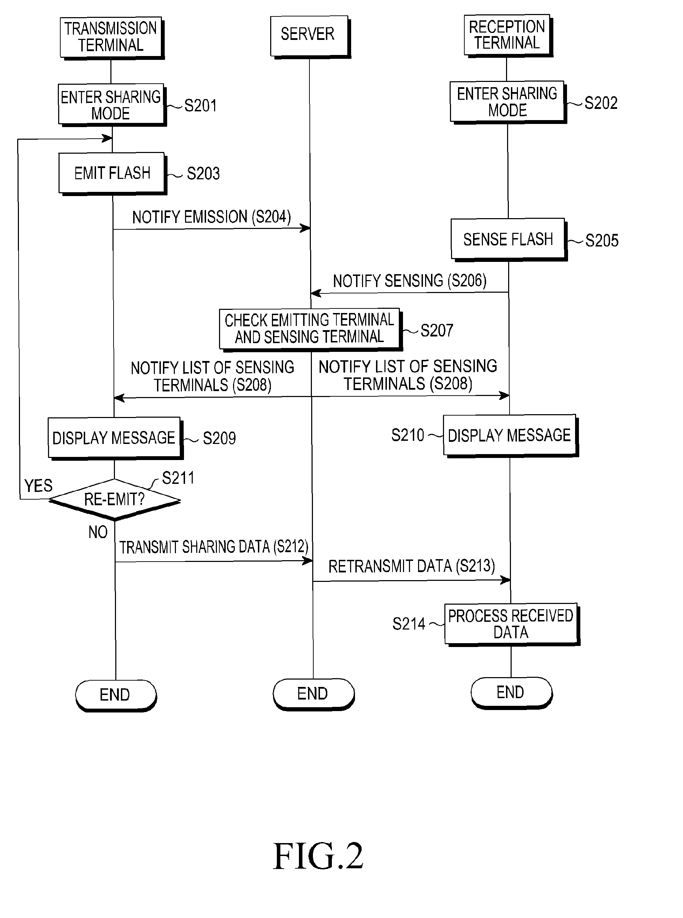

The controller 10 controls the overall operation of the portable terminal 100 according to an exemplary embodiment of the present invention, and may switch and control the operation of the portable terminal 100 according to a user input generated through the key input unit 27 or the display unit 50. The controller 10 according to an exemplary embodiment of the present invention controls the emission unit 40a and the sensing unit 40b to emit light or sound and sense light or sound emitted from another portable terminal, thereby supporting the portable terminal 10 to exchange (share) data with a portable terminal of another user through a server. The operation of the controller 10 according to an exemplary embodiment of the present invention will be described with reference to FIG. 2. However, it should be noted that the portable terminal 100 is controlled by the operation of the controller 10 and thus it will be described with reference to FIG. 2 that the portable terminal 100 is the subject of the operation.

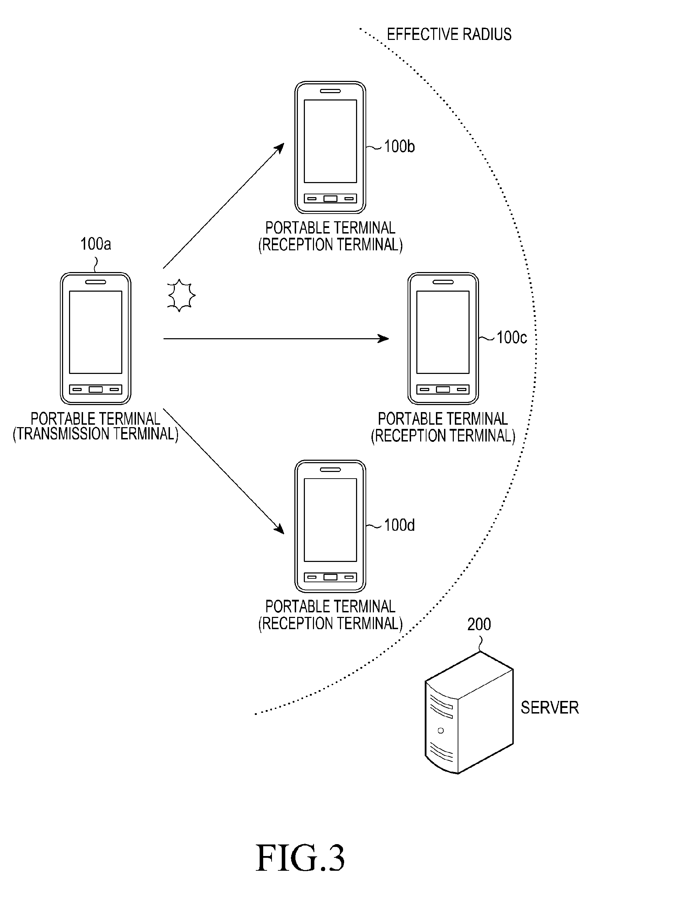

FIG. 3 is an exemplary diagram for describing a process in which a plurality of portable terminals exchange data according to an exemplary embodiment of the present invention. Prior to a description with reference to FIG. 2, a description will be made with reference to FIG. 3.

While the portable terminal 100 according to an embodiment of the present invention is shown separately as a transmission portable terminal 100a (or a transmission terminal 100a) and reception portable terminals 100b through 100d (or reception terminals 100b through 100d), the portable terminal 100 is operable as both a transmission portable terminal and a reception portable terminal.

In FIG. 3, a flash (flash light) is emitted from the emission unit 40a of the transmission terminal 100a and reaches the reception terminals 100b through 100d located within a reachable distance (effective radius), and the reception terminals 100b through 100d senses the emitted flash through the sensing unit 40b.

The transmission terminal 100a and the reception terminals 100b through 100d exchange data through emission of the emission unit 40a and sensing of the sensing unit 40b through a server 200 shown in FIG. 3. The portable terminals 100a through 100d according to an embodiment of the present invention may communicate with the server 200 through at least one of a Near-Field Communication (NFC) module (not shown), such as a WiFi module, or the RF transceiver 23, and may exchange (share) data with each other through the communication.

FIG. 2 is a flowchart illustrating a process in which a plurality of portable terminals exchange data according to an exemplary embodiment of the present invention. With reference to FIGs. 1 through 3, an exemplary embodiment of the present invention will now be described.

In steps S201 and S202, a transmission terminal and a reception terminal enter into a sharing mode.

A user of the transmission terminal may request entry into the sharing mode, and in response to the request, a controller of the transmission terminal enters the sharing mode and then receives a user's setting (selection) of data to be shared (or sharing data), such that the transmission terminal, after entering the sharing mode, waits for data sharing.

A user of the reception terminal also requests entry to the sharing mode, and in response to the request, the controller of the reception terminal waits for reception (or sharing) of the data from the transmission terminal.

With reference to FIG. 3, in steps S201 and S202, the transmission terminal 100a and the several reception terminals 100b through 100d can enter the sharing mode and wait for sharing (or exchange) of data (e.g., files such as contacts or pictures).

Referring back to FIG. 2, in steps S203 and S204, the transmission terminal controls the emission unit 40a to emit a flash and notifies a server of the emission of the flash.

As shown in FIG. 3, the transmission terminal 100a controls the flash device to emit a flash (or light), thereby allowing the reception terminals 100b through 100d located within a reachable distance (i.e., an effective radius) of the flash to sense the flash. The server 200 is notified of the emission of the flash from the transmission terminal 100a, thereby recognizing that data sharing with (or transmission to) another portable terminal is requested by the transmission terminal 100a.

When notifying the server 200, the transmission terminal 100a may transmit information, such as a time and a position at which the flash is emitted, as emission details to the server 200.

In steps S205 and S206, the reception terminal senses the flash emitted from the transmission terminal and notifies the server that the emitted flash was sensed.

Referring again to FIG. 3, the reception terminals 100b through 100d located within a reachable distance (effective radius) of the flash emitted from the transmission terminal 100a may sense the emitted light through the sensing unit 40b, and notifies the server 200 that they sense the flash emitted from the transmission terminal 100a.

When notifying the server 200, the reception terminals 100b through 100d may transmit information, such as a time and a position at which the flash is sensed, as sensing details to the server 200.

Although it has been described herein that the emission details or the sensing details may include information about the position at which the flash is emitted (or information about the position at which the emitted flash is sensed), considering that a reachable distance of light (e.g., a flash) or sound (e.g., highfrequency sound or low-frequency sound) is limited, the emission and the sensing may occur within a specific distance and thus the present invention may not need to check the positions of the emission and the sensing through a GPS.

As mentioned previously with reference to FIG. 1, according to a variation of an exemplary embodiment of the present invention, the emission unit 40a may be implemented with a sound generating device in place of the flash device and the sensing unit 40b may be implemented with a sound sensing device (e.g., a microphone) for sensing sound generated from the sound generating device.

In steps S207 and 208, the server checks the portable terminal which has emitted the flash and the portable terminals which have sensed the flash, and transmits a list of the portable terminals which have sensed the flash to the transmission terminal and the reception terminal, so all the terminals are aware of the other terminals looking to share data.The server 200 checks whether or not the flash has been emitted by the transmission terminal 100a (emission, for short)/a time at which the flash is emitted by the transmission terminal 100a (an emission time, for short)/a position at which the flash is emitted by the transmission terminal 100a (an emission position, for short) from the notification of the transmission terminal 100a and whether or not the emitted flash is sensed by the reception terminals 100b through 100d (sensing, for short)/a time at which the emitted flash is sensed by the reception terminals 100b through 100d (a sensing time, for short)/a position at which the emitted flash is sensed by the reception terminals 100b through 100d (a sensing position, for short) from the notifications of the reception terminals 100b through 100d. In this way, the server 200 recognizes that the transmission terminal 100a and the reception terminals 100b through 100d are located within a predetermined distance (e.g., an effective radius) and data exchange (sharing) therebetween has been requested.

In steps S209 and S210, the transmission terminal and the reception terminal check the list of the reception terminals which have sensed the emitted flash, and display a corresponding message.

The transmission terminal 100a, after receiving the list of the reception terminals, which have sensed the emitted flash, from the server 20, displays the received list to the user, thereby allowing the user of the transmission terminal 100a to determine with which portable terminal among the portable terminals within the effective radius that data sharing is possible.

Each of the receiving terminals 100b through 100d also receives the list of the receiving terminals which have sensed the flash emitted from the transmission terminal 100a from the server 200, and then displays the received list to the user, thereby allowing the user of each of the receiving terminals 100b through 100d to determine whether the receiving terminal of that user can share data with the transmission terminal 100a.

In steps S211 and S212, the transmission terminal 100a receives a selection of whether to re-emit the flash from the user and then transmits sharing data to the server.

The user of the transmission terminal 100a determines from the message displayed in step S209 whether the portable terminal with which the transmission terminal 100a is to share data is included. If not, the flash is re-emitted to allow the portable terminal (that is, the reception terminal) to sense the re-emitted flash. If determining from the message displayed in step S209 that the portable terminal with which the data is to be shared is included, the user of the transmission terminal 100a requests transmission of the data selected (or preset) for sharing to the server 200, and the controller 10 (FIG. 1) of the transmission terminal 100a controls the sharing data to be transmitted to the server 200 through an NFC module (not shown), or the RF transceiver 23.

In steps S213 and S214, the server retransmits the sharing data received from the transmission terminal to the reception terminal which then receives and processes the sharing data.

According to an exemplary aspect of the present invention, the reception terminals 100b through 100d receive the sharing data transmitted from the transmission terminal 100a through the server 200, such that the data is shared between the transmission terminal 100a and the reception terminals 100b through 100d. The reception terminals 100b through 100d store and process the received data (i.e. the sharing data). For example, if the sharing data comprises contact information, the reception terminals 100b through 100d may process the contact information in connection with a related application; if the sharing data is a picture file, the reception terminals may display the picture file.

As can be appreciated from the foregoing description, several portable terminals can exchange data at the same time.

The above-described methods according to the present invention can be realized in hardware, firmware or as software or computer code that can be stored in a non-transitory recording medium such as a CD ROM, a RAM, thumbnail drive, a floppy disk, a flash storage, a hard disk, or a magneto-optical disk, etc., or downloaded over a network and stored in storage, so that the methods described herein can be executed by such software using a general purpose computer, special computer, microprocessor, special processor, or in a programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While the present invention has been described in detail, the exemplary embodiments disclosed in the course of description are merely illustrative rather than restrictive and changes in components that can be substituted equivalently in the present invention also fall within the scope of the present claims appended hereto, without departing from the technical spirit and scope of the invention as provided in the present claims.

## Claims

1. A communication method for a portable terminal, the communication method comprising:
emitting, by a transmission portable terminal 100a, at least one of light or sound and notifying a server of emission details;
sensing, by a reception portable terminal 100b, 100c, 100d, the emitted light or sound from the transmission portable terminal 100a and notifying the server 200 of sensing details; and
transmitting, by the transmission portable terminal 100a data to the server 200, and receiving, by each of one or more reception portable terminals (100b, 100c, 100d) which have sensed the light or sound, the data retransmitted through the server 200.

2. The communication method of claim 1, further comprising receiving, by the transmission portable terminal 100a, a list from the server of the one or more reception portable terminals 100b, 100c, 100d that have sensed the light or sound emitted from the transmission portable terminal and displaying the received list.

3. The communication method of claim 2, further comprising, after displaying, by the transmission portable terminal 100a, the list of the one or more reception portable terminals 100b, 100c, 100d, which have sensed the light or sound, receiving a selection of whether to re-emit at least one of the light and sound from a user by the transmission portable terminal 100a.

4. The communication method of claim 2 or 3, further comprising re-emitting, by the transmission portable terminal, the at least one of the light and sound.

5. The communication method of claim 1, further comprising receiving by each of the reception portable terminals (100b, 100c, 100d) from the server 200, a list of one or more reception portable terminals that have sensed the light or sound and displaying the received list.

6. The communication method of claim 1, wherein the emission details comprise at least one of information about whether or not the flash has been emitted, an emission time, and an emission position.

7. The communication method of claim 1, wherein the sensing details comprise at least one of information about whether or not the emitted flash is sensed, a sensing time, and a sensing position.

8. The communication method of claim 1, wherein the emitted sound is in a non-audible frequency band.

9. The communication method of claim 1, wherein the server 200 checks the transmission portable terminal 100a and one or more reception portable terminals 100b, 100c, 100d that have sensed the light or sound, through the emission details and the sensing details.

10. A system for portable terminal data exchange by at least three portable terminals, said system comprising:
a transmission portable terminal (100a);
a plurality of reception portable terminals (100b, 100c, 100d);
a server (200) in communication with said transmission portable terminal (100a) and the plurality of reception portable terminals (100b, 100c, 100d);
the transmission portable terminal 100(a) having a sharing mode in which a light emission or sound emission module for contacting the plurality of reception portable terminals;
the plurality of reception portable terminals (100b, 100c, 100d) also having sharing mode that when enabled senses the light or sound emitted by the transmission portable terminal;
wherein the server receives notification from the reception mobile terminals when the reception portable terminals sense a light or sound emitted from the transmission portable terminal, and the server provides the transmission portable terminal with a list of reception portable terminals; and
wherein the transmission portable terminal (100a) transmits sharing data to the server (200) which retransmits the sharing data to the plurality of reception portable terminals (100b, 100c, 100d).

11. The system according to claim 1, **characterized in that** the server provides the reception portable terminals with a list identifying all of the reception portable terminals that respectively notified the server that an emitted light or sound has been sensed.

12. The system according to claim 10, **characterized in that** each of the reception portable terminals displays a message identifying the transmission portable terminal that emitted light or sound.

13. The system according to claim 10, **characterized in that** each of the reception portable terminals displays a message identifying all the reception portable terminals that notified the server that an emitted light or sound was sensed.
